(19) **Europäisches Patentamt / European Patent Office / Office européen des brevets**

(11) **EP 2 056 377 B1**

(12) **EUROPEAN PATENT SPECIFICATION**

(45) Date of publication and mention
of the grant of the patent:
**26.12.2012 Bulletin 2012/52**

(21) Application number: **07792359.7**

(22) Date of filing: **10.08.2007**

(51) Int Cl.:
*H01M 2/16* (2006.01)          *H01G 9/02* (2006.01)
*H01G 9/155* (2006.01)          *B32B 5/26* (2006.01)

(86) International application number:
**PCT/JP2007/065714**

(87) International publication number:
**WO 2008/018584 (14.02.2008 Gazette 2008/07)**

(54) **SEPARATOR FOR ENERGY DEVICE AND ENERGY DEVICE HAVING THE SAME**

SEPARATOR FÜR EINE ENERGIEEINRICHTUNG UND ENERGIEEINRICHTUNG DAMIT

SÉPARATEUR POUR DISPOSITIF D'ÉNERGIE ET DISPOSITIF D'ÉNERGIE EN POSSÉDANT UN

(84) Designated Contracting States:
**DE**

(30) Priority: **10.08.2006 JP 2006218738**

(43) Date of publication of application:
**06.05.2009 Bulletin 2009/19**

(73) Proprietor: **Mitsui Chemicals, Inc.**
**Tokyo 105-7117 (JP)**

(72) Inventors:
• **SUDOU, Yasuhiro**
**Nagoya--shi, Aichi (JP)**

• **IWATA, Masataka**
**Sodegaura-shi,Chiba (JP)**

(74) Representative: **HOFFMANN EITLE**
**Patent- und Rechtsanwälte**
**Arabellastrasse 4**
**81925 München (DE)**

(56) References cited:
**JP-A- 01 318 049          JP-A- 2002 050 547**
**JP-A- 2002 343 329          JP-A- 2006 080 057**
**US-A- 5 176 968          US-A- 5 902 696**
**US-A1- 2006 073 389**

**Description**

Technical Field

The present invention relates to a separator for energy devices which comprises a nonwoven fabric laminate prepared by the melt blowing process, and an energy device having the separator.

Background Art

Energy devices such as batteries and electric double layer capacitors have a basic cell that includes a pair of electrodes (positive and negative electrodes), a separator sandwiched by the electrodes, and an electrolyte solution with which the separator is impregnated. The separator used in energy devices is required to prevent short circuit between the electrodes and to retain electrolyte solution for smooth progression of electric reactions. Moreover, demand has arisen for thinner separators in order to achieve small, high-capacity energy devices. In general, microporous films and nonwoven fabrics have been employed as such separators.

There have been proposed several methods of increasing the electrolyte solution retention capacity of a nonwoven fabric separator, e.g., (1) a method where hydrophilic resin fibers are employed as the fibers of the nonwoven fabric, and (2) a method where microporous fibers with different cross sections are employed as the fibers constituting the nonwoven fabric (see Patent Document 1, for example). However, hydrophilization treatment of nonwoven fibers may result in poor resistance to electrolyte solution and thus in short lifetime. In addition, when a non-aqueous electrolyte solution is used in this case, the separator's electrolyte solution retention capacity may, in fact, decrease.

As other examples of the method of increasing the electrolyte solution retention capacity of a nonwoven fabric separator, there have been proposed methods in which a separator is fabricated by laminating two or more nonwoven fabric layers with different properties, e.g., (1) a method where a laminate is employed which is composed of a melt-blown nonwoven fabric layer with a small monofilament diameter and of a cloth-shaped nonwoven fabric layer formed of fibers with monofilament diameters of 5 $\mu$m or more (see Patent Document 2, for example), and (2) a method where a laminate is employed which is composed of a melt-blown nonwoven fabric layer and of a nonwoven fabric layer subjected to water jet entanglement (see Patent Document 3, for example).

Patent Document 4 concerns a combination separator for nonaqueous electrochemical cells comprising a single layer of a non-woven, polyolefinic cloth superposed with a single layer of a polyolefinic, microporous film. A preferred polyolefinic material for both the non-woven cloth and the microporous film is polypropylene.

Patent Document 5 relates to a non-aqueous electrochemical cell having spirally wound electrodes and a separator having a basis weight of at least 20 g/m$^2$ and comprising melt blown non-woven polypropylene fibers.

Patent Document 6 concerns a separator for a battery and a lithium ion battery using the same. The battery separator is obtained by press forming a meltblown nonwoven fabric comprising 4-methyl-1-pentene polymer or a 4-methyl-1-pentene/alpha-olefin copolymer.

Patent Document 7 relates to a separator for an electric double-layer capacitor which is composed of a polybutylene telephtharate nonwoven fabric which is said to prevent the short-circuiting of an electrode.

However, the current situation is that energy devices with sufficient voltage retention have not yet been provided even by using the above nonwoven fabric laminates.

Patent Document 1: Japanese Patent Application Laid-Open No.60-65449
Patent Document 2: Japanese Patent Application Laid-Open No.61-281454
Patent Document 3: Japanese Patent Application Laid-Open No.05-174806
Patent Document 4: US 5 902 696 A
Patent Document 5: US 5 176 968 A
Patent Document 6: US 2006/073389 A1
Patent Document 7: JP 2002 050547 A

Disclosure of Invention

Problems to be Solved by the Invention

The present inventors found that energy devices capable of voltage retention can be obtained at extremely high yields by employing as a separator for the energy devices a laminate fabricated by laminating melt-blown nonwoven fabric layers formed of the same thermoplastic resin fibers followed by smoothing of the laminate surface.

Means for Solving the Problem

A first aspect of the present invention relates to separators for energy devices shown below.

[1] A separator for energy devices including a nonwoven fabric laminate composed of two or more melt-blown nonwoven fabric layers formed of the same thermoplastic resin fibers, wherein:

the melt-blown nonwoven fabric layers each have an average fiber diameter of 0.5 $\mu$m to 3 $\mu$m, the thickness of the nonwoven fabric laminate is 40 $\mu$m or less, and

the nonwoven fabric laminate has a weight per square meter of 50 g/m$^2$ or less and a surface centerline maximum roughness (Rt value) of 10 $\mu$m or more and 35 $\mu$m or less.

[2] The separator according to [1], wherein the melt-blown nonwoven fabric layers each have a weight per square meter of 30 g/m$^2$ or less.

[3]The separator according to one of [1] and [2], wherein the nonwoven fabric laminate has a porosity of 30% to 70%.

[4] The separator according to any one of [1] to [3], wherein the nonwoven fabric laminate is prepared by pressing the melt-blown nonwoven fabric layers against one another.

[5] The separator according to any one of [1] to [4], wherein fibers constituting the melt-blown nonwoven fabric layers are made of olefin polymer.

[6] The separator according to [5], wherein the olefin polymer is a 4-methyl-1-pentene polymer.

A second aspect of the present invention relates to a manufacturing method of a separator for energy devices shown below.

[7] A manufacturing method of a separator for energy devices including laminating two or more melt-blown nonwoven fabric layers on top of one another, and pressing the melt-blown nonwoven fabric layers against one another to form a nonwoven fabric laminate, wherein:

the melt-blown nonwoven fabric layers are formed of the same thermoplastic resin fiber and each have an average fiber diameter of 0.5 $\mu$m to 3 $\mu$m, the thickness of the nonwoven fabric laminate is 40 $\mu$m or less, and the nonwoven fabric laminate has a weight per square meter of 50 g/m$^2$ or less and a surface centerline maximum roughness (Rt value) of 10 $\mu$m or more and 35 $\mu$m or less.

A third aspect of the present invention relates to energy devices shown below.

[8] An energy device including the separator according to any one of [1] to [5].

[9] The energy device according to [8], wherein the energy device contains a non-aqueous electrolyte solution.

[10] The energy device according to [8], wherein the energy device is an electric double layer condenser.

[11] The energy device according to [8], wherein the energy device is a battery. Advantageous Effect of the Invention

A separator for energy devices according to the present invention, which is formed of a melt-blown nonwoven fabric laminate, offers small pore diameters, uniform fiber density, uniform thickness, small pore size variations and excellent surface smoothness, and hardly allows an internal short circuit.
A manufacturing method of the present invention for manufacturing a separator for energy devices involves lamination of two or more nonwoven fabric layers which are formed of the same thermoplastic resin fibers. At this point, the nonwoven fabric layers are pressed against one another by application of pressing force. Thus, the manufacturing method of the present invention is characterized in that the thickness and porosity of the resultant separator can be adjusted by appropriately adjusting the level of the pressing force. Reduced separator thickness can realize small, high-capacity energy devices. Moreover, the separator's electrolyte solution retention capacity can be controlled by appropriate porosity adjustment. Furthermore, separators with desired properties can be obtained by appropriately selecting the nonwoven fabric materials. By employing these separators, energy devices can be obtained that offer less self-discharge and have high voltage retention.

Best Mode for Carrying Out the Invention

1. Melt-blown nonwoven fabric

[Thermoplastic resin]

The fibers constituting melt-blown nonwoven fabrics according to the present invention are made of any known thermoplastic resin. Examples of such thermoplastic resins include olefin polymers, polyesters (e.g., polyethylene terephthalate, polybutylene terephthalate, and polyethylene naphthalate), polyamides (e.g., nylon-6, nylon-66, and polymethaxylene adipamide), polyvinyl chloride, polyimide, ethylene/vinyl acetate copolymer, polyacrylonitrile, polycarbonate, polystyrene, ionomers, and mixtures thereof.

The thermoplastic resin constituting the fibers of melt-blown nonwoven fabrics may contain general purpose additives as needed within a scope which does not affect the present invention. Examples of such additives include antioxidants, weathering stabilizers, antistatic agents, antifogging agents, blocking inhibitors, lubricants, nucleating agents, pigments, dyes, natural oils, synthesized oils, waxes, and other polymers.

The molecular weight (melt flow rate) of the thermoplastic resin is not particularly limited as long as thermoplastic resin fibers can be produced by melt-spinning.

When a separator of the present invention for energy devices is used for an energy device containing a non-aqueous electrolyte solution, the separator is preferably made hydrophobic. Correspondingly, the fibers constituting the melt-blown nonwoven fabric are preferably made of resin with high hydrophobicity, such as olefin polymer or polystyrene. In order for the separator to have high chemical resistance and water resistant, it is more preferable that these fibers be made of olefin polymer.

The olefin polymer refer to a polymer primarily composed of an $\alpha$-olefin, such as a homopolymer or copolymer of an $\alpha$-olefin such as ethylene, propylene, 1-butene, 1-hexene, 4-methyl-1-pentene or 1-octene.

Examples of ethylene polymers include ethylene homopolymers such as high pressure low density polyethylene, linear low density polyethylene (LLDPE) and high density polyethylene; and polymers primarily composed of ethylene, such as random copolymers of ethylene and $\alpha$-olefins having 3-20 carbon atoms, ethylene/propylene random copolymers, ethylene/1-butene random copolymers, ethylene/4-methyl-1-pentene random copolymers, ethylene/1-hexene random copolymers, and ethylene/1-octene random copolymers.

Examples of propylene polymers include propylene homopolymers (so-called "polypropylens"); and polymers primarily composed of propylene, such as propylene/ethylene random copolymers, propylene/ethylene/1-butene random copolymers (so-called "random polypropylenes"), propylene block copolymers, and propylene/1-butene random copolymers.

Additional examples of the olefin polymers include 1-butene polymers such as 1-butene homopolymers, 1-butene/ethylene copolymers and 1-butene/propylene copolymers; and 4-methyl-1-pentene polymers such as poly 4-methyl-1-pentene, which will be detailed below.

Among these olefin polymers, propylene polymers with melting points of 140°C or higher and 4-methyl-1-pentene polymers with melting points of 210°C or higher are preferable because the resulting melt-blown nonwoven fabric shows excellent heat resistance. In particular, the 4-methyl-1-pentene polymers are preferable because excellent heat resistance and chemical resistance can be obtained.

The melt flow rate of the olefin polymer is not particularly limited as long as melt-blown nonwoven fabrics can be produced by melt-spinning; it can be set to an appropriate level in view of production conditions of the melt-blown nonwoven fabric, formability of the resultant nonwoven fabric laminate into a separator for energy devices, mechanical strength, and so forth. For example, when a propylene polymer is to be used, it is preferable that the propylene polymer generally have a melt flow rate of 10 to 2,000 g/10min, more preferably 15 to 1,000 g/10min, as measured at 230°C and under a load of 2.16 kg. When a 4-methyl-1-pentene polymer is to be used, it is preferable that the 4-methyl-1-pentene polymer generally have a melt flow rate of 100 to 1,000 g/10min, more preferably 150 to 500 g/10min, as measured at 260°C and under a load of 5 kg.

[4-methyl-1-penten polymers]

Among other olefin polymers , the fibers constituting the melt-blown nonwoven fabric are preferably made of 4-methyl-1-pentene polymer particularly where high heat resistance is required for the resultant separator. 4-methyl-1-pentene polymers show high heat resistance (melting point = 210-280°C) since they have large side chains attached to their main chain and therefore their mobility is restricted.

The 4-methyl-1-pentene polymer constituting the melt-blown nonwoven fabric may be a homopolymer of 4-methyl-1-pentene or a copolymer of 4-methyl-1-pentene and an $\alpha$-olefin having 2-20 carbon atoms, which the copolymer primarily composed of 4-methyl-1-pentene. Examples of the $\alpha$-olefin having 2-20 carbon atoms include ethylene, propylene, 1-butene, 1-hexene, 1-octene, 1-decene, 1-dodecene and 1-tetradecene. The α-olefins to be copolymerized may be used alone or in combination.

When a 4-methyl-1-pentene copolymer is employed for the fiber of the melt-blown nonwoven fabric, the amount of the α-olefin unit, a copolymerization unit, is preferably 20% by weight or less, more preferably 10% by weight or less. An α-olefin unit content of greater than 20% by weight may result in poor heat resistance.

For increased heat resistance, the melting point of the 4-methyl-1-pentent polymer is preferably 210°C to 280°C, more preferably 230°C to 250°C, and the Vicat softening temperature (as measured in accordance with ASTM 1525) is preferably 160°C or higher, more preferably 170°C or higher. If the melting point or Vicat softening point of the 4-methyl-1-pentene polymer falls within the above range, high heat resistance can be imparted to the resultant separator. The melting point and Vicat softening point of the 4-methyl-1-pentene polymer can be appropriately adjusted by the type and/or amount of a monomer to be copolymerized with 4-methyl-1-pentene.

The 4-methyl-1-pentene polymer can be prepared by any known method, e.g., by using a stereospecific catalyst.

[Melt-blown nonwoven fabric]

The average fiber diameter of a melt-blown nonwoven fabric according to the present invention is 0.5 μm to 3 μm, more preferably 1 μm to 3 μm. If the average fiber diameter is too large, the pore diameter of the nonwoven fabric so increases that internal short circuits occur when it is used for a separator. Such a separator is not suitable as a separator for energy devices. If the average fiber diameter is too small, the resultant separator may have poor mechanical strength.

The average fiber diameter of the melt-blown nonwoven fabric according to the present invention was measured by averaging the diameters of 100 fibers randomly selected from a 2,000x electron microscope image of a surface of the melt-blown nonwoven fabric.

The weight per square meter of the melt-blown nonwoven fabric according to the present invention is not particularly limited as along as the weight per square meter of the resultant nonwoven fabric laminate does not exceed 50 g/m$^2$; however, it is generally 4 g/m$^2$ to 30 g/m$^2$, more preferably 4 g/m$^2$ to 15 g/m$^2$.

[Production process of melt-blown nonwoven fabric]

A melt-blown nonwoven fabric according to the present invention can be prepared through a known melt blowing process. By way of example, the melt-blown nonwoven fabric can be produced as follows: As a nonwoven fabric source, thermoplastic resin is melted, discharged from spinning nozzles, and exposed to high-temperature, high-pressure gas to form microfibers, which are then deposited onto a collector such as a porous belt or porous drum.

The production conditions are not particularly limited and can be appropriately determined depending on the required thickness and fiber diameter of the melt-blown nonwoven fabric. For example, the flow rate (discharge volume) of the high-temperature, high-pressure gas may be set to 4 to 30 Nm$^3$/min/m, the distance between the discharge ports of spinning nozzles and collector surface (porous belt) may be set to 3 cm to 55 cm, and the mesh width may be set to 5 to 30.

2. Separator for energy device

A separator of the present invention for energy devices is formed of a nonwoven fabric laminate composed of two or more layers of the above-noted melt-blown nonwoven fabric, the layers being formed of the same thermoplastic resin fibers, wherein the weight per square meter of the nonwoven fabric laminate is 50 g/m$^2$ or less, preferably 8 g/m$^2$ to 25 g/m$^2$, more preferably 10 g/m$^2$ to 20 g/m$^2$, and the centerline maximum roughness (Rt value) of the nonwoven fabric laminate is 35 μm or less, preferably 30 μm or less, more preferably 10 μm to 20 μm. The number of the melt-blown nonwoven fabric layers in the nonwoven laminate can be determined depending on the intended purpose; however, it is generally 2 to 4. If the number is 2 or greater, the nonwoven laminate has uniform thickness, small average pore diameter, and small pore diameter variations, whereby it is made possible to obtain a separator for energy devices that is capable of providing energy devices capable of voltage retention at high yields. Use of a separator formed of a single melt-blown nonwoven fabric layer, which has the same weight per square meter as a melt-blown nonwoven fabric laminate formed of two or more melt-blown nonwoven fabric layers, results in small yields of energy devices capable of voltage retention. Moreover, defects may occur in nonwoven fabric laminates having a centerline maximum roughness (Rt value) of greater than 35 μm, leading to short circuits.

If the weight per square meter of the nonwoven fabric laminate is too small, it may result in small voltage retention. Meanwhile, suppose the thickness of the nonwoven fabric laminate is constant, porosity decreases with increasing weight per square meter. Too small porosity results in reduction in the electrolyte solution retention capacity. For this reason, the thickness of the nonwoven fabric laminate is set to 50 μm or less, 40 μm or less, preferably 10 μm

to 33 μm.

High yield manufacturing of energy devices (e.g., electric double layer condensers) capable of voltage retention can be realized by employing as their separator a laminate of two or more nonwoven fabric layers. The reason for this is considered as follows: thermoplastic resin fibers produced upon production of a melt-blown nonwoven fabric by melt-spinning as described above fail to be uniformly deposited onto a belt or drum, leading to differences in the fiber deposition amount and resulting in the formation of fiber-poor regions, i.e., large pores (defects). Such defects can be somewhat removed by increasing the weight per square meter of the melt-blown nonwoven fabric, but this undesirably makes the nonwoven fabric itself thick.

In contrast, by laminating a plurality of melt-blown nonwoven layers on top of one another, the thickness variations in the layers are canceled, making the laminate thickness uniform as a whole and realizing a nonwoven fabric laminate which has a uniform thickness and free from defects. This cannot be achieved by a single melt-blown nonwoven layer.

Two or more melt-blown nonwoven fabric layers contained in a nonwoven fabric laminate according to the present invention may be identical or different as long as the average fiber diameter of the fibers constituting the nonwoven fabrics is in the range of 0.5 μm to 3 μm.

The porosity of a separator of the present invention for energy devices is preferably 30% to 70%. High porosity provides a separator with high electrolyte solution retention capacity. Porosity is also responsible for the reduction of the separator resistance (for ensuring output power). Different devices require different values of porosity for their separator in order to ensure required output power. For example, the porosity of the separator for electric double layer condensers is preferably set higher than that of the separator for lithium ion batteries. The porosity of the separator for electric double layer condensers is generally 50% to 70%, and the porosity of the separator for lithium ion batteries is generally 40% to 60%.

Porosity can be adjusted by controlling the temperature, pressure, etc., at which nonwoven fabric layers are laminated and pressed against one another for the fabrication of a nonwoven fabric laminate. For example, upon fabrication, porosity can be reduced by increasing the temperature and pressing force and can be increased by reducing the temperature and pressing force.

A separator of the present invention for energy devices generally has an average surface roughness (Ra value) of 1 μm to 2 μm. In the separator of the present invention the nonwoven fabric laminate has a uniform thickness and smooth surface. For this reason, when the separator is sandwiched between positive and negative electrode materials, less unwanted spaces are generated and whereby formation of a bulky energy device can be avoided.

3. Manufacturing method of separator for energy devices

A separator of the present invention for energy devices is manufactured as follows: two or more of the above-described melt-blown nonwoven fabric layers which are formed of the same thermoplastic resin fibers and which have an average fiber diameter of 0.5 μm to 3 μm are laminated on top of one another and pressed against one another to form a nonwoven fabric laminate which has a weight per square meter of 50 g/m$^2$ or less and a surface centerline maximum roughness (Rt value) of 35 μm or less.

Lamination of the melt-blown nonwoven fabric layers can be achieved for instance by either of the following two methods. It should be noted that the lamination method is not limited to the following methods.

(1) After winding each of two or more melt-blown nonwoven fabrics onto a take-up roll, or without winding them onto the respective take-up rolls, they are laminated on top of one another followed by pressing of the laminate from upper and lower sides. Here, lamination is preferably carried out while applying heat or pressure that can melt at least some part of the fibers constituting the melt-blown nonwoven fabrics.

(2) A single melt-blown nonwoven fabric is produced. After winding it onto a take-up roll, or without winding it onto the take-up roll, it is placed onto a conveyer. Thereafter, fibers produced by melt blowing are blown onto the melt-blown nonwoven fabric on the conveyer, depositing another melt-blown nonwoven fabric layer by application of heat and pressure. Here, heat derived from the blown fibers can be utilized for lamination.

Pressing means is not particularly limited and any press formation means can be employed that can apply pressure along the thickness of the nonwoven fabric laminate. For example, press molding, roll molding, and other processes are available, by which two or more deposited melt-blown nonwoven fabric sheets are pressed one another to form a nonwoven fabric laminate. Among them, roll molding using rolls is preferable.

A variety of materials, including elastic bodies such as rubbers, metals, resins, and combinations thereof, can be employed for rolls used for roll molding. It is preferable that at least one of the rolls be made of elastic body. By doing so, pore diameters tend to be small and uniform. The elastic roll preferably has an elasticity of 20 kg/cm$^2$ to 300 kg/cm$^2$. If the rolls are made only of rigid body such as metal (e.g., steel), portions of the nonwoven fabric that have a large weight per square meter are exclusively pressed. Thus, pore diameters tend to be large and the pore size distribution tends be broad.

The conditions used for pressing melt-blown nonwoven fabric layers (e.g., temperature and pressure) can be appropriately set according to the intended purpose. Too high temperature or pressure causes excessive fiber fusion and thereby clogging tends to occur. The clogged nonwoven fabric laminate used as a separator for an energy device increases electric resistance and/or reduces electrolyte solution amount retained therein, which may reduce electric capacity. On the other hand, too low temperature or pressure may result in non-uniform nonwoven fabric laminate thickness. In addition, since the porosity of the nonwoven fabric laminate is adjusted by controlling the pressing condition as described above, the pressing condition is set according to the desired characteristics (e.g., resistance and electrolyte solution retention capacity) of the resultant separator.

The pressing temperature is preferably set around, but lower than, the melting point of the fibers constituting the melt-blown nonwoven fabric. For example, if a 4-methyl-1-pentene polymer or the like is employed for the fibers of the melt-blown nonwoven fabric, the surface temperature of the rolls may be preferably set to 50°C to 180°C, more preferably 70°C to 160°C.

A non-woven fabric laminate composed of three or more nonwoven fabric layers can be fabricated in a similar manner. More specifically, all of the melt-blown nonwoven fabric layers may be laminated on top of one another at the same time. Alternatively, after laminating two or more melt-blown nonwoven fabric layers on top of one another, additional melt-blown nonwoven fabric layer(s) may be deposited thereon.

4. Energy device

An energy device of the present invention includes the above-described separator of the present invention for energy devices. Examples of the energy device include various known energy devices such as primary batteries, secondary batteries, fuel batteries, condensers, and electric double layer condensers.

The energy device of the present invention generally includes a positive electrode material, a negative electrode material, and the separator of the present invention sandwiched by the electrodes. These elements are preferably rolled up when housed in an energy device container. The container is filled with an electrolyte solution and sealed. Since the energy device of the present invention includes such a nonwoven fabric laminate composed of two or more melt-blown nonwoven fabric layers, it is compact and offers excellent electric characteristics (e.g., voltage retention).

A non-aqueous electrolyte solution can be employed as the electrolyte solution of the energy device of the present invention particularly where the separator is made of olefin polymer. Examples of the non-aqueous electrolyte solution include those solutions primarily containing propylene carbonate, γ-butyrolactone, acetnitrile, dimethylformamide, or sulfolane derivative. Examples of energy devices where non-aqueous electrolyte solution is employed include lithium ion batteries and electric double layer condensers.

Examples

The present invention will be described in more detail with reference to Examples, which however shall not be construed as limiting the scope of the present invention.

Evaluations of prepared nonwoven fabrics and nonwoven fabric laminates were made as described below. Results are shown in Table 1.

[Weight per square meter]

Weight per square meter was measured in accordance with JIS L1096 6.4. Specifically, 3 test pieces (20 cm x 20 cm) were taken from sample and measured for their weight. The measured values were averaged and converted to weight per square meter ($g/m^2$).

[Thickness]

In accordance with JIS L1096 6.5, 5 different points of sample were measured for their thickness under the following condition: initial load = 0.7 kPa; measurement time = 10 seconds after initial load application. The measured values were then averaged.

[Standard deviation of thickness]

The standard deviation of the thicknesses of the prepared nonwoven fabric (nonwoven fabric laminate or single melt-blown nonwoven fabric) were measured as follows : The thicknesses were measured at 25 mm intervals along MD and CD directions over 60 cm long, and the standard deviation σ was calculated from the obtained thicknesses (n=299).
$$\sigma^2 = \frac{1}{n}\sum_{i=1}^{n}(x_i - \bar{x})^2$$

where $x_1$, $x_2$, ..., and $x_n$ each denote thickness at its measurement point and n denotes the number of measurements.

[Porosity]

The value calculated using the following equation is defined as porosity:

```
Porosity (P) = [1-W/(T x d)] x 100
```

where W denotes weight per square meter (g/m$^2$), T denotes thickness (μm) of the nonwoven fabric (separator), and d denotes density (g/cm$^3$) of resin (e.g., fiber) constituting the nonwoven fabric (separator).

[Average surface roughness (Ra value)]

Surface heights were measured in an area (90 μm in MD direction, 120 μm in CD direction) of sample using a general purpose non-contact 3-dimensional optical profilometer (Wyko NT2000 from Veeco Instruments). Ra value was then obtained by arithmetically averaging all of the measured values.

[Surface centerline roughness (Rt value)]

Rt value was obtained by calculating the difference between the maximum height and minimum height in the area (90 μm in MD direction, 120 μm in CD direction) of sample measured using the general purpose non-contact 3-dimensional optical profilometer (Wyko NT2000 from Veeco Instruments).

[Maximum pore diameter and average pore diameter]

The prepared nonwoven fabric or nonwoven fabric laminate was immersed in Fluorinert, a fluorine-based inert liquid from Sumitomo 3M Limited. Using a capillary flow porometer (model: CFP-1200AE from Porous materials, Inc.), the prepared samples were measured for their maximum pore diameter and average pore diameter.

[Membrane resistance]

The prepared nonwoven fabric or nonwoven fabric laminate was immersed in a 40wt% potassium hydroxide aqueous solution for 1 minute. The nonwoven fabric or nonwoven fabric laminate was then placed on paper. A plate (30 mm x 50 mm) was placed thereon, and a load of 5kg was applied for 1 minute. Using an LCR meter, impedance (1 kHz) was measured from upper and lower sides of the compressed nonwoven fabric or nonwoven fabric laminate in the thickness direction. Samples with low membrane resistance and thus are acceptable for energy devices were ranked "○", samples with intermediate membrane resistance but are still acceptable for energy devices were ranked "Δ", and samples with high membrane resistance and thus are problematic for energy devices were ranked "×."

[Production ratio of energy devices capable of voltage retention]

Ten electric double layer condenser samples were manufactured using the prepared nonwoven fabric laminate. The electric double layer condensers were measured for their self-discharge amount as follows: Each sample was charged to 3.75V, placed in a constant-temperature room for 25 days at 25°C and measured for voltage, and the voltage reduction amount, i.e., difference between the initial voltage value (3.75V) and post-test voltage value was measured. A sample in which voltage reduction amount was 20 mV or less was evaluated as an energy device capable of voltage retention, and a sample in which voltage reduction amount was greater than 20 mV was evaluated as a defective energy device. Based on the above criteria, the production ratio of energy devices capable of voltage retention was calculated.

Example 1

Molten fibers of a 4-methyl-1-pentene copolymer (PMP, product name = TPX DX820 from Mitsui Chemicals, Inc., melting point = 240°C, melt flow rate (260°C/5kg load) = 180 g/10min, Vicat softening point (ASTM D1525)= 178°C) were produced by melt blowing at a resin temperature of 350 °C and collected by a web former to produce a melt-blown nonwoven fabric, which had an average fiber diameter of 1.2 $\mu$m and weight per square meter of 6.4 g/m$^2$.

Two sheets of the prepared melt-blown nonwoven fabric were laminated and pressed against each other under linear pressure of 10 kg/cm using a calender roll device equipped with a rubber roll and steel roll set at 160°C. The obtained nonwoven fabric laminate had a weight per square meter of 12.8 g/m$^2$, thickness of 30 $\mu$m, porosity of 49%, Ra value of 1.5 $\mu$m, and Rt value of 16 $\mu$m. The sample had an excellent membrane resistance.

An electric double layer condenser was manufactured as follows using a separator for energy devices which is composed of the prepared nonwoven fabric laminate. Two aluminum etched foil plates (20 $\mu$m in thickness) were prepared. One side of each plate was coated with a kneaded slurry of polytetrafluoroethylene (PTFE), activated carbon and carbon black using a roll coater. After drying, the plates were roll-pressed to form carbon electrode foils for use as positive and negativeelectrodes. Thereafter, the prepared separator was sandwiched by the electrodes to form a laminate.

The laminate composed of the separator, positive electrode and negative electrode was coiled up to form a coiled article with a diameter of 30 mm. The coiled article was housed in an aluminum case. This product was allowed to cool down to room temperature. To the positive terminal and negative terminal attached to the case, a positive electrode lead and negative electrode lead were respectively welded. Furthermore, the case was sealed while forming an electrolyte solution inlet. An electrolyte solution was poured into the case through the inlet. The electrolyte solution was prepared by dissolving as an electrolyte 1.5 mol/l tetraethylammonium tetrafluoroborate into propylene carbonate. This case was heated to 150°C and retained for 3 hours at that temperature for removal of water content. In this way electric double layer condensers including the separator for energy devices were obtained. The electric double layer condensers had a rated voltage of 2.8V and electric capacity of 10F.

The production ratio of electric double layer condensers capable of voltage retention was 100%.

Examples 2 to 4 and Reference Example 1

Melt-blown nonwoven fabrics were produced using the same 4-methyl-1-pentene copolymer as in Example 1. As shown in Table 1, the weight per square meter and average fiber diameter of the melt-blown nonwoven fabrics were adjusted to fall within the range of 5.4 g/m$^2$ to 10.0 g/m$^2$ and 1.0 $\mu$m to 2.0 $\mu$m, respectively.

Using the same device as in Example 1, two sheets of the respective melt-blown nonwoven fabrics were laminated to produce separators for energy devices while adjusting the pressing force. Evaluation results for the separators are shown in Table 1.

Example 5

A melt-blown nonwoven fabric of Example 5 was prepared as in Example 1 except that a propylene homopolymer (melt flow rate = 20 g/10min, melting point = 160°C) was employed in place of the 4-methyl-1-pentene copolymer. Evaluation results of the obtained melt-blown nonwoven fabric are shown in Table 1.

Comparative Examples 1 to 5

Melt-blown nonwoven fabrics of Comparative Examples 1 to 5 were prepared using a 4-methyl-1-pentene copolymer as in Example 1. Each single melt-blown nonwoven fabric was pressed at a linear pressure of 10 kg/cm using a calender roll device as in Example 1 without forming laminates. Subsequently, electric double layer condensers were manufactured and evaluated as in Example 1. Evaluation results are shown in Table 1.

Table 1

|  | Ex. 1 | Ex 2 | Ex. 3 | Ex 4 | Ex. 5 | Ref. Ex. 1 | Comp. Ex. 1 | Comp. Ex. 2 | Comp. Ex. 3 | Comp. Ex. 4 | Comp. Ex. 5 |
|---|---|---|---|---|---|---|---|---|---|---|---|
| Source | PMP | PMP | PMP | PMP | PP | P | PMP | PMP | PMP | PMP | PMP |
| Number of lamination | 2 | 2 | 2 | 2 | 2 | 2 | 1 | 1 | 1 | 1 | 1 |

(continued)

| | Ex. 1 | Ex 2 | Ex. 3 | Ex 4 | Ex. 5 | Ref. Ex. 1 | Comp. Ex. 1 | Comp. Ex. 2 | Comp. Ex. 3 | Comp. Ex. 4 | Comp. Ex. 5 |
|---|---|---|---|---|---|---|---|---|---|---|---|
| Source | PMP | PMP | PMP | PMP | PP | P | PMP | PMP | PMP | PMP | PMP |
| Weight per square meter (g/m$^2$) of single nonwoven fabric layer | 6.4 | 6.1 | 5.4 | 6.0 | 6.0 | 10.0 | 13.4 | 12.9 | 12.5 | 11.2 | 20.0 |
| Weight per square meter (g/m$^2$) of nonwoven fabric laminate | 12.8 | 12.1 | 10.8 | 12.0 | 12.0 | 20.0 | | | | | |
| Thickness (μm) of single nonwoven fabric layer | | | | | | | | | | | |
| Thickness (μm) of nonwoven fabric laminate | 30 | 28 | 25 | 36 | 25 | 46 | 31 | 29 | 27 | 25 | 46 |
| Standard deviation of thickness | - | 1.1 | - | - | - | - | 1.9 | - | - | - | - |
| Average fiber diameter (μm) | 1.2 | 1.2 | 1.0 | 1.5 | 1.5 | 2.0 | 1.2 | 1.2 | 1.2 | 1.2 | 1.2 |
| Porosity (%) | 49 | 48 | 48 | 60 | 48 | 48 | 48 | 46 | 44 | 46 | 48 |
| Ra (μm) | 1.5 | 1.5 | - | 1.6 | 1.3 | - | 1.3 | 1.6 | 1.7 | - | - |
| Rt (μm) | 16 | 19 | 17 | 30 | 19 | 19 | 21 | 24 | 27 | 40 | 22 |
| Maximum pore diameter (μm) | - | 1.3 | - | - | - | - | 1.6 | - | - | - | - |
| Average pore diameter (μm) | - | 1.1 | - | - | - | - | 1.4 | - | × | - | - |
| Membrane resistance | ○ | ○ | ○ | Δ | ○ | Δ | ○ | - | × | ○ | Δ |

(continued)

| | Ex. 1 | Ex 2 | Ex. 3 | Ex 4 | Ex. 5 | Ref. Ex . 1 | Comp. Ex. 1 | Comp. Ex. 2 | Comp. Ex. 3 | Comp. Ex. 4 | Comp. Ex. 5 |
|---|---|---|---|---|---|---|---|---|---|---|---|
| Source | PMP | PMP | PMP | PMP | PP | P | PMP | PMP | PMP | PMP | PMP |
| Production ratio of energy devices capable of voltage retention (%) | 100 | 100 | 100 | 100 | 100 | 100 | 80 | 80 | 80 | <80 | 80 |

Table 1 demonstrates that the thickness of the melt-blown nonwoven fabric laminates is more uniform than that of the single melt-blown nonwoven fabrics, and that the average pore diameter and pore variations of the melt-blown nonwoven fabric laminates are smaller than those the single melt-blown nonwoven fabrics. Moreover, it was demonstrated that the electric double layer condensers prepared in Examples, where separators composed of two or more laminated melt-blown nonwoven fabric layers were used, were high in the production ratio of energy devices capable of voltage retention compared to the electric double layer condensers of Comparative Examples, where separators composed of a single melt-blown nonwoven fabric layer were used.

Industrial Applicability

The separator of the present invention for energy devices is suitable for use as a separator for primary batteries, secondary batteries, fuel batteries, condensers, electric double layer condensers, etc.

The disclosure of Japanese Patent Application No.2006-218738, filed on August 10, 2006, including the specification, drawings and abstract is incorporated herein by reference in its entirety.

**Claims**

1.  A separator for energy devices comprising a nonwoven fabric laminate composed of two or more melt-blown nonwoven fabric layers formed of the same thermoplastic resin fibers, wherein:

    the melt-blown nonwoven fabric layers each have an average fiber diameter of 0.5 $\mu$m to 3 $\mu$m,
    the thickness of the nonwoven fabric laminate is 40 $\mu$m or less, and
    the nonwoven fabric laminate has a weight per square meter of 50 g/m$^2$ or less and a surface centerline maximum roughness (Rt value) of from 10 $\mu$m to 35 $\mu$m.

2.  The separator according to claim 1, wherein the melt-blown nonwoven fabric layers each have a weight per square meter of 30 g/m$^2$ or less.

3.  The separator according to claim 1, wherein the nonwoven fabric laminate has a porosity of 30% to 70%.

4.  The separator according to claim 1, wherein the nonwoven fabric laminate is prepared by pressing the melt-blown nonwoven fabric layers against one another.

5.  The separator according to claim 1, wherein fibers constituting the melt-blown nonwoven fabric layers are made of olefin polymer.

6.  The separator according to claim 5, wherein the olefin polymer is a 4-methyl-1-pentene polymer.

7.  A manufacturing method of a separator for energy devices comprising laminating two or more melt-blown nonwoven fabric layers on top of one another, and pressing the melt-blown nonwoven fabric layers against one another to form a nonwoven fabric laminate, wherein:

the melt-blown nonwoven fabric layers are formed of the same thermoplastic resin fiber and each have an average fiber diameter of 0.5 $\mu$m to 3 $\mu$m,
the thickness of the nonwoven fabric laminate is 40 $\mu$m or less, and
the nonwoven fabric laminate has a weight per square meter of 50 g/m$^2$ or less and a surface centerline maximum roughness (Rt value) of from 10 $\mu$m to 35 $\mu$m.

8. An energy device comprising the separator according to claim 1.

9. The energy device according to claim 8, wherein the energy device contains a non-aqueous electrolyte solution.

10. The energy device according to claim 8, wherein the energy device is an electric double layer condenser.

11. The energy device according to claim 8, wherein the energy device is a battery.

**Patentansprüche**

1. Separator für Energievorrichtungen, der ein Vliesstofflaminat umfasst, das aus zwei oder mehr schmelzgeblasenen Vliesmaterialschichten aufgebaut ist, die aus den gleichen thermoplastischen Harzfasern gebildet sind, worin:

die schmelzgeblasenen Vliesstoffschichten jeweils einen mittleren Faserdurchmesser von 0,5 bis 3 $\mu$m aufweisen,
die Dicke des Vliesstofflaminats 40 $\mu$m oder weniger ist, und
das Vliesstofflaminat ein Gewicht pro Quadratmeter von 50 g/m$^2$ oder weniger und eine Oberflächen-Mittellinien-Maximumrauheit (Rt-Wert) von 10 $\mu$m bis 35 $\mu$m aufweist.

2. Separator gemäß Anspruch 1, worin die schmelzgeblasenen Vliesstoffschichten jeweils ein Gewicht pro Quadratmeter von 30 g/m$^2$ oder weniger aufweisen.

3. Separator gemäß Anspruch 1, worin das Vliesstofflaminat eine Porosität von 30 % bis 70 % aufweist.

4. Separator gemäß Anspruch 1, worin das Vliesstofflaminat durch Aneinanderpressen der schmelzgeblasenen Vliesstoffschichten hergestellt wird.

5. Separator gemäß Anspruch 1, worin die Fasern, die die schmelzgeblasenen Vliesstoffschichten aufbauen, aus Olefinpolymer bestehen.

6. Separator gemäß Anspruch 5, worin das Olefinpolymer ein 4-Methyl-1-pentenpolymer ist.

7. Herstellungsverfahren für einen Separator für Energievorrichtungen, das das Übereinanderlaminieren von zwei oder mehr schmelzgeblasenen Vliesstoffschichten und das Aneinanderpressen der schmelzgeblasenen Vliesstoffsichten umfasst, um ein Vliesstofflaminat zu bilden, worin:

die schmelzgeblasenen Vliesstoffschichten aus den gleichen thermoplastischen Harzfasern gebildet sind und jeweils einen mittleren Faserdurchmesser von 0,5 bis 3 $\mu$m aufweisen,
die Dicke des Vliesstofflaminats 40 $\mu$m oder weniger ist, und
das Vliesstofflaminat ein Gewicht pro Quadratmeter von 50 g/m$^2$ oder weniger und eine Oberflächen-Mittellinien-Maximumrauheit (Rt-Wert) von 10 $\mu$m bis 35 $\mu$m aufweist.

8. Energievorrichtung, die den Separator gemäß Anspruch 1 umfasst.

9. Energievorrichtung gemäß Anspruch 8, worin die Energievorrichtung eine nicht-wässrige Elektrolytlösung enthält.

10. Energievorrichtung gemäß Anspruch 8, worin die Energievorrichtung ein elektrischer Doppelschichtkondensator ist.

11. Energievorrichtung gemäß Anspruch 8, worin die Energievorrichtung eine Batterie ist.

## Revendications

1. Séparateur pour dispositifs d'énergie comprenant un stratifié de tissu non tissé composé de deux ou plusieurs couches de tissu non tissé obtenues par fusion-soufflage formées des mêmes fibres de résine thermoplastique, dans lequel :

   les couches de tissu non tissé obtenues par fusion-soufflage ont chacune un diamètre de fibre moyen de 0,5 $\mu$m à 3 $\mu$m,
   l'épaisseur du stratifié de tissu non tissé est de 40 $\mu$m ou moins, et
   le stratifié de tissu non tissé a un poids par mètre carré de 50 g/m$^2$ ou moins et une rugosité maximale de ligne médiane en surface (valeur Rt) de 10 $\mu$m à 35 $\mu$m.

2. Séparateur selon la revendication 1, dans lequel les couches de tissu non tissé obtenues par fusion-soufflage ont chacune un poids par mètre carré de 30 g/m$^2$ ou moins.

3. Séparateur selon la revendication 1, dans lequel le stratifié de tissu non tissé a une porosité de 30 % à 70 %.

4. Séparateur selon la revendication 1, dans lequel le stratifié de tissu non tissé est préparé en pressant les couches de tissu non tissé obtenues par fusion-soufflage les unes contre les autres.

5. Séparateur selon la revendication 1, dans lequel des fibres constituant les couches de tissu non tissé obtenues par fusion-soufflage sont faites de polymère d'oléfine.

6. Séparateur selon la revendication 5, dans lequel le polymère d'oléfine est un polymère de 4-méthyl-1-pentène.

7. Procédé de fabrication d'un séparateur pour dispositifs d'énergie comprenant la stratification de deux ou plusieurs couches de tissu non tissé obtenues par fusion-soufflage les unes au-dessus des autres, et la pression des couches de tissu non tissé obtenues par fusion-soufflage les unes contre les autres pour former un stratifié de tissu non tissé, dans lequel :

   les couches de tissu non tissé obtenues par fusion-soufflage sont formées de la même fibre de résine thermoplastique et chacune a un diamètre de fibre moyen de 0,5 $\mu$m à 3 $\mu$m,
   l'épaisseur du stratifié de tissu non tissé est de 40 $\mu$m ou moins, et
   le stratifié de tissu non tissé a un poids par mètre carré de 50 g/m$^2$ ou moins et une rugosité maximale de ligne médiane en surface (valeur Rt) de 10 $\mu$m à 35 $\mu$m.

8. Dispositif d'énergie comprenant le séparateur selon la revendication 1.

9. Dispositif d'énergie selon la revendication 8, dans lequel le dispositif d'énergie contient une solution non aqueuse d'électrolyte.

10. Dispositif d'énergie selon la revendication 8, dans lequel le dispositif d'énergie est un condensateur à double couche électrique.

11. Dispositif d'énergie selon la revendication 8, dans lequel le dispositif d'énergie est une batterie.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60065449 A
- JP 61281454 A
- JP 5174806 A
- US 5902696 A
- US 5176968 A
- US 2006073389 A1
- JP 2002050547 A
- JP 2006218738 A